# EUROPEAN PATENT SPECIFICATION

(11) **EP 2 414 263 B1**
(45) Date of publication and mention of the grant of the patent: **25.10.2017**
(21) Application number: 10759082.0
(22) Date of filing: 26.03.2010
(51) Int. Cl.: B65G 53/22

(54) **METHOD AND MEANS FOR FEEDING FLUIDISABLE MATERIALS**
VERFAHREN UND MITTEL ZUR FÖRDERUNG VERFLÜSSIGBARER MATERIALIEN
PROCEDE ET MOYEN D'ALIMENTATION EN MATERIAUX FLUIDISABLES

(30) Priority: 30.03.2009 NO 20091305
(43) Date of publication of application: 08.02.2012
(73) Proprietor: Norsk Hydro ASA, 0240 Oslo (NO)
(72) Inventor: KARLSEN, Morten, 6884 Øvre Årdal (NO); DYRØY, Are, 3920 Porsgrunn (NO); ØREN, Tore, 6885 Årdalstangen (NO)
(74) Representative: Berg, André
(86) International application number: PCT/NO2010/000114
(87) International publication number: WO 2010/114382

(56) References cited:
- BE-A- 633 884
- DE-A1- 2 055 736
- DE-A1- 3 125 045
- FR-A5- 2 217 912
- GB-A- 2 145 697
- GB-A- 2 145 697
- US-A- 3 148 865
- US-A- 3 148 865
- US-A- 6 017 180
- US-A1- 5 474 401

## Description

The present invention relates to a method and means for feeding fluidisable materials. In particular, the invention relates to feeding of materials such as alumina and/or fluoride to aluminium electrolysis cells.

Traditionally almost all existing electrolysis technologies serving the aluminium production are equipped with silos and volumetric feeders and they are all controlled by volumetric measures. This exposes the process to the material density variations that typically can vary ± 10%. Furthermore, this variation combined with other storage and handling issues, such as segregation, may and does influence the feed stability to the pot negatively. Moreover, most electrolysis cells are today also already equipped with silos, hence the newly developed unit is based on the idea of retrofit.
In the past, several feeders for this type of material and application have been invented and patented. For instance, from EP 605037B1 there is known a feeder having a reservoir with an outlet downwards to a discharge channel having a fluidisable element in its bottom. The feeding is based upon a fluidised discharge that will be dependent upon the duration of the period of time the element is activated. Thus, the feeder works by the principle of time controlled discharge/dosage.
BE 633884 A discloses a system for feeding material continuously to a metallurgical process by use of compressed gas. The system comprises three interconnected receptacles where a first receptacle represents a reservoir for the materials to be transported, a second receptacle receiving materials from the first one and comprising a system creating a pressurized flow, and a third receptacle that is provided with several outlet for feeding material to plural recipients. The material is in a fluidised state in the receptacles. The operation of the system is intended to be continuous, and do not benefit from the angle of repose of the fluidised material in an intermittent operation. This document discloses a method according to the preamble of claim 1 and a means for feeding according to the preamble of claim 7.

In accordance to the present invention there is now proposed a feeding device that has more accuracy than that of previous solutions. This is due to the fact that the feeder is provided with a device that isolates a discharge reservoir, from a main bulk of material (silo), in terms of forces. Thus, the said elements make the feeder less influenced by the actual filling level in the silo.

The flow of material with regard to activating the feed (start-up phase) and stopping the feed is also improved in the sense of repeatability.

This and further advantages can be achieved by the invention as defined by the accompanying claims.

In the following, the invention shall be further described by Figures and examples where:
Figure 1 discloses a feeding device in accordance with the present invention, seen in perspective,
Figure 2 discloses a cut through a feeding device in accordance to Fig. 1 and in a first cycle step where the silo of the feeder has been filled up,
Figure 3 discloses the feeding device of Fig. 2, in a second cycle step,
Figure 4 discloses the feeding device of Fig. 2, in a third cycle step,
Figure 5 is a diagram showing set point dose 1 kg AlF₃, measured versus predicted,
Figure 6 is a diagram showing set point dose 1 kg Al₂O₃, measured versus predicted.

### Functional principle

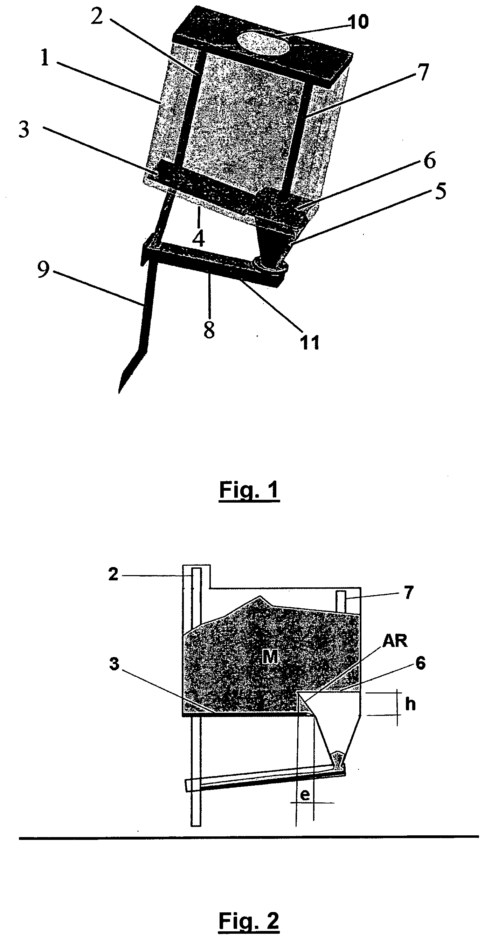

As can be seen from Fig. 1, the feeding device comprises a silo 1 with a fluidising element 3, such as one or more pads, in the bottom of the silo. The element can be activated by pressurised gas, such as air, flowing through a controllable valve at position 4 (not shown). The bottom of the silo and/or the element is slanted at an angle, preferably between 1 - 5°, towards an outlet of the silo.

At the outlet there is arranged a feeder reservoir, in the examples shown comprising a substantial vertical, downward converging part 5 shaped as a cone and a roof 6 as its main elements. Above the inlet to the cone 5 the roof 6 is arranged, and it will restrict material inside the silo to induce a pressure in the material in the cone. Further, the constructive details of the roof that is in contact with two side walls and one back wall of the silo and that have a projected area overlapping a part of the fluidising element, will be of high significance with regard to the stability of the feed from the silo.

The working principle of the roof together with the outlet and the fluidising element is that, due to the angle of repose (AR), the material will only be flowing into the cone when the element 3 is activated. When element 3 is non-activated, the transport of material to the inlet of the cone 5 is stopped and precisely defined by the material's angle of repose (AR).

From the cone 5 materials is led through a closed, slanted conveyer 11 having a fluidised element in its bottom (not shown). The pad can be activated by a valve at position 8 (not shown) allowing pressurised gas to be introduced in the element.

Alumina and/or alumina fluoride is fed trough a hole 10 in the top of the silo 1, when the silo is filled. When the silo 1 is filled with materials there will be introduced much air into the silo. This air needs to be evacuated, and assisted by the de-aeration tube 2 this excessive air from the inside of the silo will be ducted to the inside of the electrolysis cell (to be explained later). As shown in the Figure, the de-aeration tube 2 can be connected to the end part of the slanted conveyer 11, above the material outlet tube 9.
Figure 2 illustrates the sequence when the silo is filled. The fluidising pad 3 is in-active when silo is filled, (i.e. valve in position 4 closed). Further, the details of the de-aeration tubes 2 and 7 are shown. The tubes end in the upper area of the silo. Further, in the Fig. 2 the angle of repose "AR" of the material "M" close to the outlet is shown, as well as the overhung "e" represented by the roof 6 and the extension of the fluidisable element 3. The fluidisable element preferably extends to the border of the inlet opening of the cone. In addition, the height of the roof is at level "h" above the fluidised element.
Preferably, the ratio between the overhung "e" and the height "h" is dependent on the materials angle of repose. For instance, if the angle of repose is 45°, the ratio e:h is preferably close to 1:1 or a little bit more to secure that there will be no transport of materials to the inlet opening when the fluidisable element is inactive.
It should also be understood that in the case there is applied a cone with a circular inlet, the roof may have a similar shape to establish an appropriate ratio e:h along the border of the inlet opening (not shown).
These parameters are decisive with regard to the ability the system will have to establish a defined lock i.e. an on/off function of the flow of powder material.

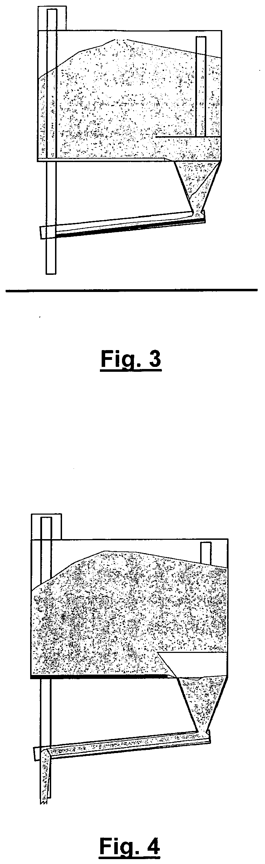

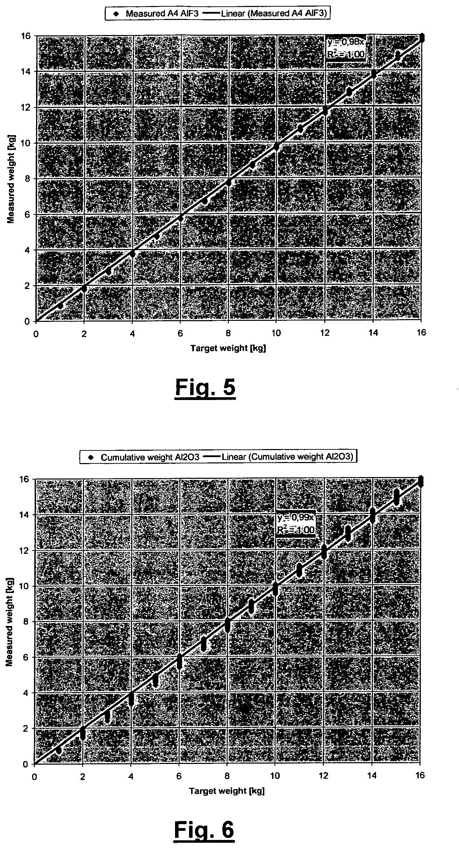

Figure 3 shows the next sequence, i.e. the filling of the feeder reservoir that includes the volume of the cone 5 and the space beneath the roof 6. The valve marked 4 in Figure 1 is open, i.e. the fluidised element 3 is active. The volume of the feeder reservoir is defined by the cone 5 and the roof 6 in Figure 1. To evacuate the air during this sequence, the de-aeration tube 7 is utilised. The de-aeration tube 7 connects the space below the roof 6 with the upper part of the silo.
Fig. 4 discloses the dosing sequence, where time/capacity determined doses are discharged from dosage reservoir to the electrolysis cell. In this sequence the valve at position 8 is activated in a certain amount of time to give the wanted dose size, through the outlet 9. During this dosing the de-aeration of the fluidising air is vented via the silo and into the de-aeration tube 2 and trough the outlet tube 9 together with the material, and further into the cell. Further, the shape of the cone is of importance with regard to repeatability. For instance, the angle of the cone is of importance with regard to internal friction and flow of mass. The cone should have an angle that ensures that the frictional forces are unidirectional. A preferred value for the angle of the cone is 5-20° from the vertical, depending on the actual material.
The cone is preferably rotational symmetric along its length axis, and further having a circular cross-section. However, other shapes such as rectangular cross-section with inclined walls (tapered shape) may be applied.
As can be seen from the Figures 5 and 6, the repeatability of the dosages for aluminium fluoride and aluminium oxide respectively, are very accurate. The performance of the tests shows so low variation, that the accuracy of the scale used influenced the results.
An important fact to ensure the most accurate repeatability of the dosages is not to completely empty the feeder buffer. Thus the control of the sequences must comply with this requirement.

The feeder is preferably constructed in a manner allowing the whole volume to be quenched or flushed during a short period of time if necessary. This situation may occur in a circumstance with anode effects.

## Claims

1. A method for feeding of material in fluidised state, by means of a silo (1) with at least one fluidisable element (3) inside the silo (1), in the bottom thereof, where said element, when activated, is able to transport material towards one first outlet and further to a fluidised conveyer (11) for controlled dosage via one second outlet (9), the material fed to the first outlet being received by a feeding reservoir with a part (5) that converges downwards onto said conveyor (11),
**characterised in that**
the material in the feeding reservoir is further separated from the rest of the material in the silo by a roof (6) arranged above the downwards converging part (5) of the reservoir, where the roof (6) is abutting the internal sidewalls and one end wall of the silo and is further arranged to protrude with the length (e) from the inlet of the vertical part, wherein the roof (6) is arranged at the height (h) above the fluidisable element (3).

2. A method in accordance to claim 1,
**characterised in that**
the ratio h/e is less than the value of the tangent of the angle of repose (AR) for the dosed material.

3. A method in accordance to claim 1,
**characterised in that**
the feeding reservoir comprises a substantially vertical cone (5).

4. A method in accordance to claim 1,
**characterised in that**
there is fed accurate dosages with very low variation in size (weight).

5. A method in accordance to claim 1,
**characterised in that**
there is always a certain amount of materials in the feeder buffer.

6. A method in accordance to claim 1,
**characterised in that**
the whole silo volume is available for quenching of anode effects, in very short period of time if needed.

7. Means for feeding fluidisable materials, comprising a silo (1) with at least one fluidisable element (3) in its bottom, where said element, when activated, is able to transport material towards one outlet (9) and onto a conveyer (11) for controlled dosage, where upstream the conveyor (11) there is arranged a feeding reservoir comprising a substantially vertical part (5) that converges downwards onto said conveyor (11),
**characterised in that**
above the vertical converging part, there is arranged a roof (6) abutting the internal sidewalls and one end wall of the silo, and further protruding with the length (e) from the inlet of the vertical part, the roof (6) being arranged at the height (h) above the fluidisable element (3).

8. Means in accordance to claim 7,
**characterised in that**
the ratio h/e is less than the value of the tangent of the angle of repose (AR) for the dosed material.

9. Means in accordance to claim 7,
**characterised in that**
the vertical part (5) is a cone.

10. Means in accordance to claim 8,
**characterised in that**
the angle of the cone (5) is between 5 and 20°.

11. Means in accordance to claim 7,
**characterised in that**
the roof (6) is convex, seen from above.

## Patentansprüche

1. Verfahren zur Zufuhr von Material in einem fluidisiertem Zustand mittels eines Silos (1) mit mindestens einem fluidisierbaren Element (3) innerhalb des Silos (1), am Boden desselben, wobei das Element, wenn es aktiviert ist, Material zu einem ersten Auslass transportieren kann und ferner zu einer fluidisierten Transporteinrictung (11) zur kontrollierten Dosierung über einen zweiten Auslass (9), wobei das Material, das dem ersten Auslass zugeführt wurde, von einem Vorratsreservoir mit einem Teil (5), der sich nach unten der Transporteinrictung (11) nähert, aufgenommen wird,
**dadurch gekennzeichnet, dass**
das Material im Vorratsreservoir des Weiteren vom Rest des Materials im Silo durch ein Dach (6) getrennt wird, das oberhalb des nach unten konvergierenden Teils (5) des Reservoirs angeordnet ist, wobei das Dach (6) gegen die internen Seitenwände und eine Entwand des Silos stößt und ferner dafür angeordnet ist, mit der Länge (e) vom Einlass des vertikalen Teils aus vorzuragen, wobei das Dach (6) in der Höhe (h) oberhalb des fluidisierbaren Elementes (3) angeordnet ist.

2. Verfahren nach Anspruch 1,
**dadurch gekennzeichnet, dass**
das Verhältnis h/e kleiner als der Wert des Tangens des Schüttwinkels (AR) für das dosierte Material ist.

3. Verfahren nach Anspruch 1,
**dadurch gekennzeichnet, dass**
das Vorratsreservoir einen im wesentlichen vertikalen Kegel (5) umfasst.

4. Verfahren nach Anspruch 1,
**dadurch gekennzeichnet, dass**
genaue Dosierungen mit sehr geringer Variation in der Größe (Gewicht) zugeführt werden.

5. Verfahren nach Anspruch 1,
**dadurch gekennzeichnet, dass**
es immer eine bestimmte Menge an Materialien im Puffer der Zuführungsvorrichtung gibt.

6. Verfahren nach Anspruch 1,
**dadurch gekennzeichnet, dass**
das gesamte Silovolumen zum Löschen von Anodeneffekten in sehr kurzer Zeit verfügbar ist, falls benötigt.

7. Mittel zum Zuführen von fluidisierbaren Materialien, die einen Silo (1) mit mindestens einem fluidisierbaren Element (3) an dessen Boden umfassen, wobei das Element, wenn es aktiviert ist, Material zu einem Auslass (9) und auf einer Transporteinrichtung (11) zur kontrollierten Dosierung transportieren kann, wobei oberhalb der Transporteinrichtung (11) ein Zufuhrreservoir angeordnet ist, dass einen im wesentlichen vertikalen Teil (5) umfasst, der nach unten auf die Transporteinrichtung (11) konvergiert,
**dadurch gekennzeichnet, dass**
oberhalb des vertikalen konvergierenden Teils ein Dach (6) angeordnet ist, das gegen die inneren Seitenwände und eine Endwand des Silos stößt und ferner mit der Länge (e) vom Einlass das vertikalen Teils aus vorragt, wobei das Dach (6) in der Höhe (h) oberhalb des fluidisierbaren Elementes (3) angeordnet ist.

8. Mittel nach Anspruch 7,
**dadurch gekennzeichnet, dass**
das Verhältnis h/e kleiner als der Wert des Tangens des Schüttwinkels (AR) für das dosierte Material ist.

9. Mittel nach Anspruch 7,
**dadurch gekennzeichnet, dass**
der vertikale Teil (5) ein Kegel ist.

10. Mittel nach Anspruch 8,
**dadurch gekennzeichnet, dass**
der Winkel des Kegels (5) zwischen 5 und 20° liegt.

11. Mittel nach Anspruch 7,
**dadurch gekennzeichnet, dass**
das Dach (6) konvex ist, von oben gesehen.

## Revendications

1. Procédé d'alimentation d'un matériau dans un état fluidisé, au moyen d'un silo (1) avec au moins un élément qui peut être fluidisé (3) à l'intérieur du silo (1), dans la partie inférieure de celui-ci, où ledit élément, une fois activé, est capable de transporter un matériau en direction d'une première sortie et ensuite vers un convoyeur fluidisé (11) pour un dosage contrôlé par l'intermédiaire d'une seconde sortie (9), le matériau alimenté vers la première sortie étant reçu par un réservoir d'alimentation possédant une partie (5) qui converge vers le bas sur ledit convoyeur (11),
**caractérisé en ce que**
le matériau dans le réservoir d'alimentation est ensuite séparé du reste du matériau dans le silo par une toiture (6) agencée au-dessus de la partie convergeant vers le bas (5) du réservoir, où la toiture (6) vient buter contre les parois latérales internes et contre une paroi d'extrémité du silo et est ensuite agencée pour faire saillie avec la longueur (e) depuis l'entrée de la partie verticale, dans lequel la toiture (6) est agencée à la hauteur (h) au-dessus de l'élément qui peut être fluidisé (3).

2. Procédé selon la revendication 1, **caractérisé en ce que** le rapport h/e est inférieur à la valeur de la tangente de l'angle de repos (AR) pour le matériau dosé.

3. Procédé selon la revendication 1, **caractérisé en ce que** le réservoir d'alimentation comprend un cône substantiellement vertical (5).

4. Procédé selon la revendication 1, **caractérisé en ce que** des doses précises sont alimentées avec une très faible variation en termes de taille (poids).

5. Procédé selon la revendication 1, **caractérisé en ce qu'**il existe toujours une certaine quantité de matériaux dans le tampon d'alimentation

6. Procédé selon la revendication 1, **caractérisé en ce que** la totalité du volume du silo est disponible pour étancher les effets anodiques, en une période de temps très brève, si nécessaire.

7. Moyen d'alimentation de matériaux qui peuvent être fluidisés, comprenant un silo (1) avec au moins un élément qui peut être fluidisé (3) dans sa partie inférieure, où ledit élément, une fois activé, est capable de transporter un matériau en direction d'une sortie (9) et sur un convoyeur (11) pour un dosage contrôlé, ou en amont du convoyeur (11) un réservoir d'alimentation est agencé comprenant une partie substantiellement verticale (5) qui converge vers le bas sur ledit convoyeur (11),
**caractérisé en ce**
**qu'**au dessus de la partie convergeant vers le haut, une toiture (6) est agencée venant buter contre les parois latérales internes et contre une paroi d'extrémité du silo, et ensuite faisant saillie avec la longueur (e) depuis l'entrée de la partie verticale, la toiture (6) étant agencée à la hauteur (h) au-dessus de l'élément que l'on peut fluidisé (3).

8. Moyen selon la revendication 7, **caractérisé en ce que** le rapport h/e est inférieur à la valeur de la tangente de l'angle de repos (AR) pour le matériau dosé.

9. Moyen selon la revendication 7, **caractérisé en ce que** la partie verticale (5) consiste en un cône.

10. Moyen selon la revendication 8, **caractérisé en ce que** l'angle du cône (5) est compris entre 5 et 20 °.

11. Moyen selon la revendication 7, **caractérisé en ce que** la toiture (6) est convexe, vue du dessus.
